# EUROPEAN PATENT APPLICATION

(11) **EP 3 299 848 A1**
(43) Date of publication of application: **28.03.2018**
(21) Application number: 16200593.8
(22) Date of filing: 24.11.2016
(51) Int. Cl.: G01W 1/00, A01G 15/00

(54) **SIMULATION OF CLOUD SEEDING AND ARTIFICIAL PRECIPITATION**

(30) Priority: 20.09.2016 KR 20160120278
(71) Applicant: Korea Meteorological Administration, Seoul 07062 (KR)
(72) Inventor: Choi, Jiwon, Seoul, (KR); Chang, Ki-Ho, Seoul, (KR); Jung, Eunsil, Seoul, (KR); Jeong, Jin-Yim, Seoul, (KR); Kim, Baek-Jo, Seoul, (KR)
(74) Representative: Rüger, Barthelt & Abel

(57) **Abstract**

Disclosed herein are a method and system for automatically analyzing the simulated influence time zone of a dispersed material for artificial precipitation in a time-series manner. The method includes a first step for executing, by a numerical simulation execution unit, numerical simulations on an artificial precipitation experiment according to a dispersed seeding material, a second step for calculating, by a spread field information calculation unit, spread field information about the seeding material from the results of the numerical simulations, a third step for calculating, by a point dispersion time range calculation unit, a spread time range of the seeding material for one or more observation points based on the calculated spread field information about the seeding material, and a fourth step for displaying, by a time-series display unit, the spread time range of the seeding material in observation data time series at each of the observation points.

## Description

### CROSS REFERENCE TO RELATED APPLICATION

The present application claims the benefit of Korean Patent Application No. 10-2016-0120278 filed in the Korean Intellectual Property Office on 20 September, 2016, the entire contents of which are incorporated herein by reference.

### BACKGROUND OF THE INVENTION

### 1. Technical Field

The present invention relates to a method and system for automatically analyzing the simulated influence time zone of a dispersed material for artificial precipitation in a time-series manner.

### 2. Description of the Related Art

A variety of types of unforeseen weather, such as typhoon, a localized torrential downpour, and a drought, are generated due to unusual weather attributable to a change of the weather. They cause physical and economical loss directly and indirectly. In Korea, during the past 43 years (1973-2015), an average annual amount of precipitation was 1,335 mm, which is higher than a global annual amount of precipitation. However, the precipitation is chiefly concentrated on the summer season, and a regional drought is generated due to a severe regional/seasonal deflection of the precipitation. Accordingly, it is necessary to manage water for the securing of water resources and systematic management (Park Jeong-soo, 2016). A scheme for securing alternate water resources from the nature in the state in which water resources have been limited includes the construction of a dam, deep sea water, seawater desalination, and artificial precipitation. From among theme, the artificial rain may become a scheme for securing water resources and reducing drought damage with a relatively cheap cost (Korea Water Resources Corporation, 1998).

Artificial rain is a technology in which clouds are developed by artificially dispersing cloud seeds (hereinafter referred to as "seeding") when a cloud layer is formed, but cloud drops of water do not grow into raindrops because ice nuclei or cloud condensation nuclei functioning as cloud seeds in the air are less and precipitation condensation is activated so that it more rains or it rains in other areas in advance. In artificial rain, ice nuclei, such as silver iodide (AgI) or dry ice, are dispersed into cold clouds (0°C or less) depending on a rain formation process according to a cloud temperature so that supercooling water particles in the clouds are changed into ice, thereby producing or enhancing ice crystals to cause precipitation. A hygroscopic substance, such as sodium chloride (NaCl) or calcium chloride (CaCl2) functioning as condensation nuclei, is dispersed into a warm cloud (0°C or more), thereby facilitating a merge process to produce precipitation. An experiment for artificial rain is divided into an airborne experiment and a ground experiment depending on a seeding location. In the airborne experiment, an airplane on which cloud seed dispersal equipment is mounted directly disperses cloud seeds into clouds. In the ground experiment, a generator installed on the ground is used. In order to verify artificial rain using such airplane and ground experiments, there is a need for information about the spread time and effect time of a seeding material.

### [Prior Art Document]

### [Non-Patent Document]

(Non-Patent Document 1) Park Jeong-soo, 2016, Introduction of typhoon precipitation characteristics and K-water water management typhoon handling system, Water and Future of Korea Water Resources Association Paper, 18-24.
(Non-Patent Document 2) Korea Water Resources Corporation, 1998, A Study on the Adaptability of Clark-Hall Model and Cloud Seeding Technology. KOWACO-IPD-98-08, 193 p.

### SUMMARY OF THE INVENTION

Accordingly, the present invention has been made keeping in mind the above problems occurring in the prior art, and an object of the present invention is to improve a method for verifying an experiment effect by calculating the spread time range of each observation point in a numerical model after performing an artificial precipitation experiment and providing information about a simulated influence time zone according to an artificial precipitation dispersal material for each observation point.

In order to accomplish the above objects, the present invention provides

In accordance with an embodiment of the present invention, a method for automatically analyzing a simulated influence time zone of a seeing material in a time-series manner includes a first step for executing, by a numerical simulation execution unit, numerical simulations on an artificial precipitation experiment according to a dispersed seeding material, a second step for calculating, by a spread field information calculation unit, spread field information about the seeding material from the results of the numerical simulations, a third step for calculating, by a point dispersion time range calculation unit, a spread time range of the seeding material for one or more observation points based on the calculated spread field information about the seeding material, and a fourth step for displaying, by a time-series display unit, the spread time ranges of the seeding material in observation data time series at the respective observation points.

In accordance with another embodiment of the present invention, the spread period range of the seeding material includes non-seeding, a seeding time and a seeding effect time.

In accordance with an embodiment of the present invention, a system for automatically analyzing a simulated influence time zone of a seeing material in a time-series manner includes a numerical simulation execution unit configured to execute numerical simulations on an artificial precipitation experiment according to a dispersed seeding material, a spread field information calculation unit configured to calculate spread field information about the seeding material from the results of the numerical simulations, a point dispersion time range calculation unit configured to calculate a spread time range of the seeding material for one or more observation points based on the calculated spread field information about the seeding material, and a time-series display unit configured to display the spread time ranges of the seeding material in observation data time series at the respective observation points.

In accordance with another embodiment of the present invention, the seeding material spread period range includes non-seeding, a seeding time and a seeding effect time.

### BRIEF DESCRIPTION OF THE DRAWINGS

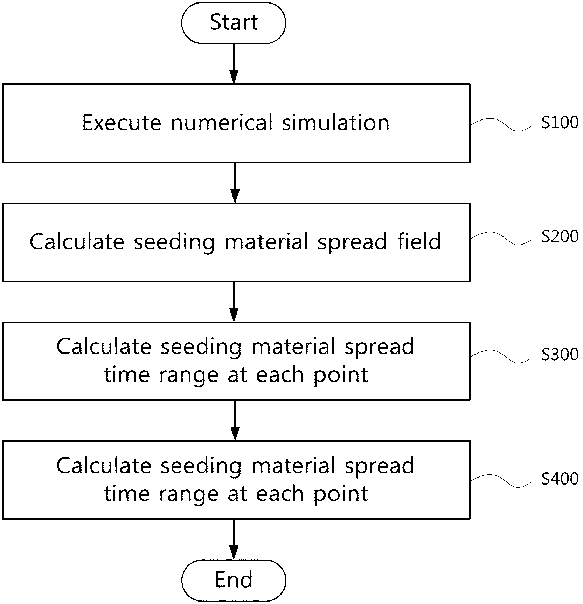

FIG. 1 is a flowchart illustrating a method for automatically analyzing a simulated influence time zone of a seeding material in a time-series manner in accordance with an embodiment of the present invention.

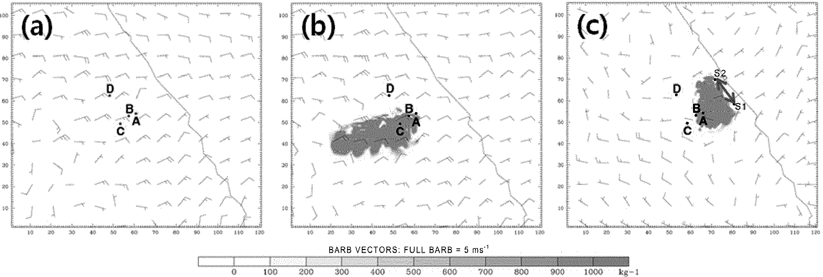

FIG. 2 is a diagram for illustrating an initial field "a" simulated in numerical simulations, the spread field "b" of a seeding material when a ground experiment is performed, and the spread field "c" of the seeding material when an airborne experiment is performed in accordance with an embodiment of the present invention.

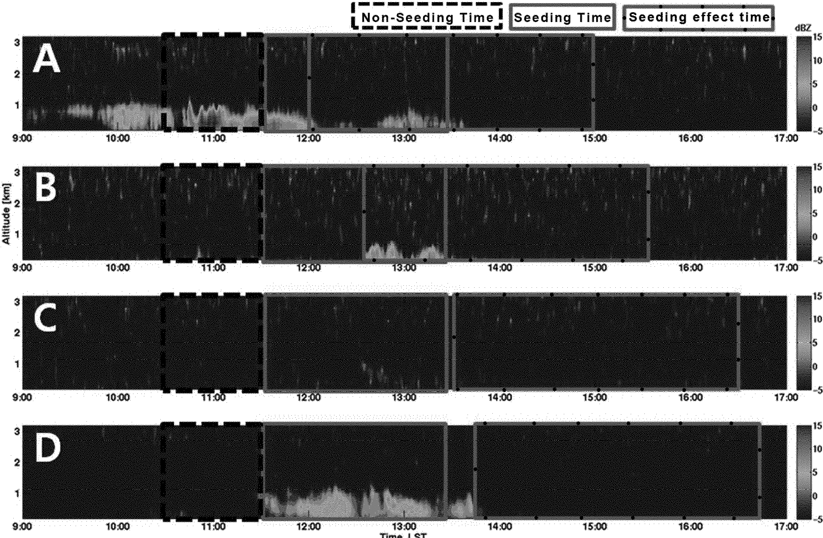

FIG. 3 is a diagram for illustrating the method for automatically analyzing the simulated influence time zone of a dispersed material for artificial precipitation in a time-series manner for the observation data of a micro rain radar according to the execution of an artificial precipitation experiment in accordance with an embodiment of the present invention.

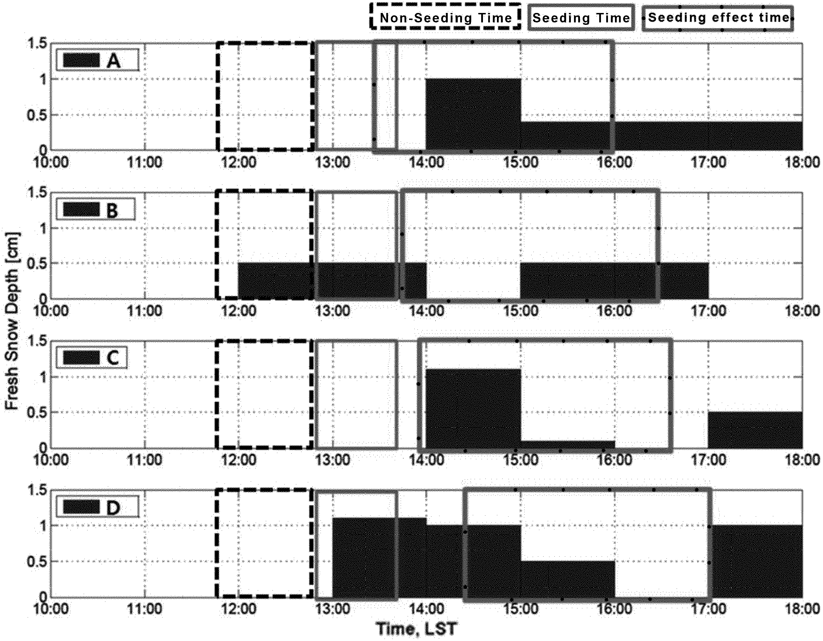

FIG. 4 is a diagram for illustrating the method for automatically analyzing the simulated influence time zone of a dispersed material in a time-series manner for the observation data of a snow accumulation system according to the execution of an artificial precipitation experiment in accordance with an embodiment of the present invention.

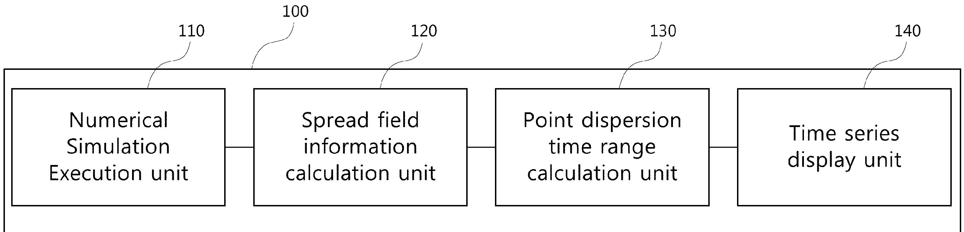

FIG. 5 is a diagram showing the configuration of a system for automatically analyzing the simulated influence time zone of a dispersed material in a time-series manner in accordance with an embodiment of the present invention.

### <Description of reference numerals>

110: numerical simulation execution unit
120: spread field information calculation unit
130: point dispersion time range calculation unit
140: time-series display unit

### DETAILED DESCRIPTION

Hereinafter, embodiments of the present invention are described in detail with reference to the accompanying drawings. However, in describing the embodiments, a detailed description of the known function or element related to the present invention will be omitted if it is deemed to make the gist of the present invention unnecessarily vague. Furthermore, it is to be noted that in the drawings, the size of each element may have been exaggerated and does not correspond to an actual size.

FIG. 1 is a flowchart illustrating a method for automatically analyzing the simulated influence time zone of a dispersed material for artificial precipitation in a time-series manner in accordance with an embodiment of the present invention. FIGS. 2 to 4 are diagrams for illustrating the method for automatically analyzing the simulated influence time zone of a dispersed material for artificial precipitation in a time-series manner in accordance with an embodiment of the present invention.

Hereinafter, the method for automatically analyzing the simulated influence time zone of a dispersed material for artificial precipitation (hereinafter referred to as a "seeding material") in a time-series manner in accordance with an embodiment of the present invention in accordance with an embodiment of the present invention is described with reference to FIGS. 1 to 4.

First, a numerical simulation execution unit executes numerical simulations on an artificial precipitation experiment according to the dispersal of a seeding material at step S100. The artificial precipitation experiment may include an airborne experiment and a ground experiment. Numerical simulations for the artificial precipitation experiment may be performed based on several conditions, such as weather factors (the direction of the wind, the velocity of the wind, temperature, humidity, etc.) of a target area and seeding information (the dispersal location, height, disposal distance and the amount of dispersal of a seeding material, etc.).

A spread field information calculation unit calculates spread field information about the seeding material based on the numerical simulations at step S200. FIG. 2 shows the spread field of a seeding material calculated based on numerical simulations for a simulated artificial precipitation experiment (i.e., the dispersal of the seeding material). Specific observation points A, B, C and D which may be influenced by the seeding of the artificial precipitation experiment may be selected. FIG. 2(a) shows an initial field before the seeding material is disposed. FIGS. 2(b) and 2(c) illustrate spread fields calculated based on numerical simulations corresponding to a ground experiment and an airborne experiment.

A point dispersion time range calculation unit calculates the spread time range of the seeding material for one or more observation points based on the calculated spread field information about the seeding material at step S300. In relation to the spread time range, time until 1 hour again before the seeding starts may be said to be a "non-seeding time." Time from a seeding start time to a seeding end time may be said to be a "seeding time". Time from the time when the seeding material reaches each of the observation points A, B, C and D to the time when the seeding material remains intact or the time until 15 minutes ∼ 3 hours from the end of the seeding may be said to be a "seeding effect time." In one embodiment, the point spread time range calculation unit 130 may calculate the non-seeding time, the seeding time and the seeding effect time (i.e., the time taken for the seeding material is reached and the time when the seeding material remains intact) based on the results of the numerical simulations with respect to each of the observation points A, B, C and D.

A time-series display unit displays observation data time series in the observation points A, B, C and D corresponding to the respective spread time ranges of the seeding material at step S400. FIGS. 3 and 4 show examples in which spread times corresponding to respective observation points calculated through numerical simulations have been applied. Data observed by a micro rain radar (FIG. 3) or a snow accumulation system (FIG. 4) at each observation point is represented in the form of a time-series graph. The non-seeding time (indicated by a black undulating line), the seeding time (indicated by a red solid line) and the seeding effect time (indicated by a green solid line) calculated at the same time are displayed at corresponding times of the respective observation data graphs. More specifically, the seeding effect time is differently displayed depending on a corresponding observation point. Accordingly, whether the seeding material has reached the target area or not and whether a seeding effect is present or not may be determined.

FIG. 5 is a diagram showing the configuration of a system for automatically analyzing the simulated influence time zone of a dispersed material for artificial precipitation in a time-series manner in accordance with an embodiment of the present invention.

The system 100 for automatically analyzing the simulated influence time zone of a dispersed material for artificial precipitation in a time-series manner in accordance with an embodiment of the present invention is described below with reference to FIG. 5.

As shown in FIG. 5, the system 100 for automatically analyzing the simulated influence time zone of a dispersed material for artificial precipitation in a time-series manner in accordance with an embodiment of the present invention is configured to include the numerical simulation execution unit 110, the spread field information calculation unit 120, the point dispersion time range calculation unit 130 and the time-series display unit 140.

First, the numerical simulation execution unit 110 executes numerical simulations on an artificial precipitation experiment according to the dispersal of a seeding material. The artificial precipitation experiment may include an airborne experiment and a ground experiment. Numerical simulations for the artificial precipitation experiment may be performed based on several conditions, such as weather factors (the direction of the wind, the velocity of the wind, temperature, humidity, etc.) of a target area and seeding information (the dispersal location, height, disposal distance and the amount of dispersal of a seeding material, etc.).

The spread field information calculation unit 120 calculates spread field information about the seeding material based on the numerical simulations.

The point dispersion time range calculation unit 130 calculates the spread time range of the seeding material for one or more observation points based on the calculated spread field information about the seeding material.

In one embodiment, the point spread time range calculation unit 130 may calculate the non-seeding time, the seeding time and the seeding effect time (i.e., the time taken for the seeding material is reached and the time when the seeding material remains intact) based on the results of the numerical simulations with respect to each of the observation points A, B, C and D.

The time-series display unit 140 displays the spread time ranges of the seeding material in observation data time series at the respective observation points A, B, C and D. Data observed at the respective observation points are represented in the form of a time-series graph. The non-seeding time (indicated by a black undulating line), the seeding time (indicated by a red solid line) and the seeding effect time (indicated by a green solid line) calculated at the same time are displayed at corresponding times of the respective observation data graphs.

In accordance with an embodiment of the present invention, spread field information about a seeding material is calculated by executing numerical simulations on an artificial precipitation experiment. The spread time range of the seeding material at each observation point is calculated based on the spread field information. Accordingly, there is an advantage in that a time zone influenced by artificial precipitation seeding can be immediately determined and displayed.

As described above, the detailed embodiments of the present invention have been described in the detailed description. However, the present invention may be modified in various ways without departing from the category of the invention. Accordingly, the technical spirit of the present invention should not be limited to the aforementioned embodiments, but should be defined by not only the appended claims, but equivalents thereof.

## Claims

1. A method for automatically analyzing a simulated influence time zone of a seeing material in a time-series manner, the method comprising:
a first step for executing, by a numerical simulation execution unit, numerical simulations on an artificial precipitation experiment according to a dispersed seeding material;
a second step for calculating, by a spread field information calculation unit, spread field information about the seeding material from results of the numerical simulations;
a third step for calculating, by a point dispersion time range calculation unit, a spread time range of the seeding material for one or more observation points based on the calculated spread field information about the seeding material; and
a fourth step for displaying, by a time-series display unit, the spread time range of the seeding material in observation data time series at each of the observation points.

2. The method of claim 1, wherein the spread period range of the seeding material comprises non-seeding, a seeding time and a seeding effect time.

3. A system for automatically analyzing a simulated influence time zone of a seeing material in a time-series manner, the system comprising:
a numerical simulation execution unit configured to execute numerical simulations on an artificial precipitation experiment according to a dispersed seeding material;
a spread field information calculation unit configured to calculate spread field information about the seeding material from results of the numerical simulations;
a point dispersion time range calculation unit configured to calculate a spread time range of the seeding material for one or more observation points based on the calculated spread field information about the seeding material; and
a time-series display unit configured to display the spread time range of the seeding material in observation data time series at each of the observation points.

4. The system of claim 3, wherein the spread period range of the seeding material comprises non-seeding, a seeding time and a seeding effect time.
